**Europäisches Patentamt**

**European Patent Office**

**Office européen des brevets**

(11) Publication number: **0 183 540**
**B1**

(12) **EUROPEAN PATENT SPECIFICATION**

(45) Date of publication of patent specification: **16.01.91**

(21) Application number: **85308620.5**

(22) Date of filing: **27.11.85**

(51) Int. Cl.⁵: **H 04 N 7/08, H 04 M 11/08**

(54) **User terminals for accessing image data.**

(30) Priority: **28.11.84 JP 251273/84**
**20.04.85 JP 85237/85**

(43) Date of publication of application:
**04.06.86 Bulletin 86/23**

(45) Publication of the grant of the patent:
**16.01.91 Bulletin 91/03**

(84) Designated Contracting States:
**AT DE FR GB NL**

(56) References cited:
**AT-B- 375 514**
**DE-A-3 012 429**
**DE-A-3 128 529**
**DE-A-3 244 212**

(73) Proprietor: **SONY CORPORATION**
**7-35 Kitashinagawa 6-Chome Shinagawa-ku**
**Tokyo 141 (JP)**

(72) Inventor: **Maeda, Satoru c/o Patents Division**
**Sony Corporation 6-7-35 Kitashinagawa**
**Shinagawa-ku Tokyo 141 (JP)**
Inventor: **Tao, Akihiko c/o Patents Division**
**Sony Corporation 6-7-35 Kitashinagawa**
**Shinagawa-ku Tokyo 141 (JP)**

(74) Representative: **Cotter, Ivan John et al**
**D. YOUNG & CO. 10 Staple Inn**
**London WC1V 7RD (GB)**

## Description

This invention relates to user terminals for accessing image data, for example in videotex systems.

A videotex system is a system for transmitting information, in the form of pages of text and colour graphics, over telephone lines from an information centre providing electronic information services to a user terminal at which the information may be viewed page by page on a display screen. The system can provide users with information from many different sources, such as banks, newspapers, businesses and private information networks.

In videotex systems, the information is organised into successive pages of information, each page corresponding to one complete image on the display screen. Each page is identified within the system by a number or other identifier which is displayed on the screen simultaneously with the information. The user terminal conventionally includes a display apparatus, such as a cathode ray tube (CRT) having the display screen on which the successive images are displayed, and a keypad including a plurality of keys for controlling the user terminal and for entering data. In order to access information from the information centre, the user inputs commands at the user terminal by operating the keypad and image data corresponding to requested pages is transmitted from the information centre over the telephone line to the user terminal. Some commands request specific subject matter or pages, and frequently instructions for entering other commands will be included in the received information itself.

When the telephone link between the user terminal and the information centre is disconnected, either intentionally or accidentally, the user must redial to reestablish the telephone link. However, redialling initialises the videotex system, so that the user is returned to the initial page of information rather than to the page which was being viewed at the time of disconnection. If the user could remember the page last viewed, that page number can be entered directly to resume use without significant interruption. There are, however, hundreds of thousands of pages available, making it very unlikely that the user will remember the correct number. As a result, the user must step through the pages of information, duplicating the previous search, in order to rediscover the desired page. This process is time-consuming and vexatious, and represents a significant disadvantage in the use of videotex systems.

UK Patent Application Publication No. GB—A—1 581 136 discloses a user terminal according to the first (pre-characterising) part of claim 1 of the present specification.

The present invention provides a user terminal as set forth in claim 1 of the present specification.

Preferred user terminals embodying the invention and described hereinbelow enable a selected image easily to be recalled by providing for the storage of a respective identifying number.

Accordingly, an image being viewed at the time of disconnection of a telephone line or other communications network easily may be recalled upon reconnection of the telephone line. An image number of a currently displayed image is stored automatically, so that the image readily may be recalled by actuation of a unitary key for causing the stored number to be transmitted to the information centre as a request for the respective image. In fact, it is possible for the numbers of several selected images to be stored in respective addresses in a memory, and a selected one of these images may be recalled by accessing the respective address within the memory.

In one embodiment of the present invention, the image number memory means stores only the image number data of the image currently being displayed, and the input keying means includes unitary autorequest key means actuable for entering the predetermined further image selection command. In this embodiment, if the telephone line is disconnected and reconnected, the image being viewed at the time of disconnection can be recalled immediately by actuation of the autorequest key means.

In another embodiment of the invention, the image number memory means is operative to store the image number data for a selected plurality of the images, and the input keying means is actuable for selectively entering a corresponding plurality of the predetermined further image selection commands each for selecting a respective one of the plurality of images. In this embodiment, the input keying means is actuable for effecting a reserve and register operation in which the image number data of the image currently being displayed is stored in the image number memory means. Any one of the images whose image number data is stored may be recalled at any time by actuation of the input keying means to access the respective image number data for the memory.

The invention will now be further described, by way of illustrative and non-limiting example, with reference to the accompanying drawings, in which:

Figure 1 is a block diagram of a videotex system including a user terminal embodying the invention;

Figure 1A is a diagram of a keypad of the user terminal of Figure 1;

Figure 2 is a diagram showing an example of a display screen available in a videotex system;

Figure 3 is a flowchart of an operating program for storing image number data in the user terminal of Figure 1;

Figure 4 is a flowchart of an operating program for the user terminal of Figure 1 for transmitting image number data automatically to an information centre;

Figure 5 is a diagram illustrating the organisation of an image number memory of another user terminal embodying the invention;

Figure 6 is a flowchart of key operation for a reserve and register operation; and

Figure 7 is a flowchart of an operating program for the reserve and register operation of Figure 6.

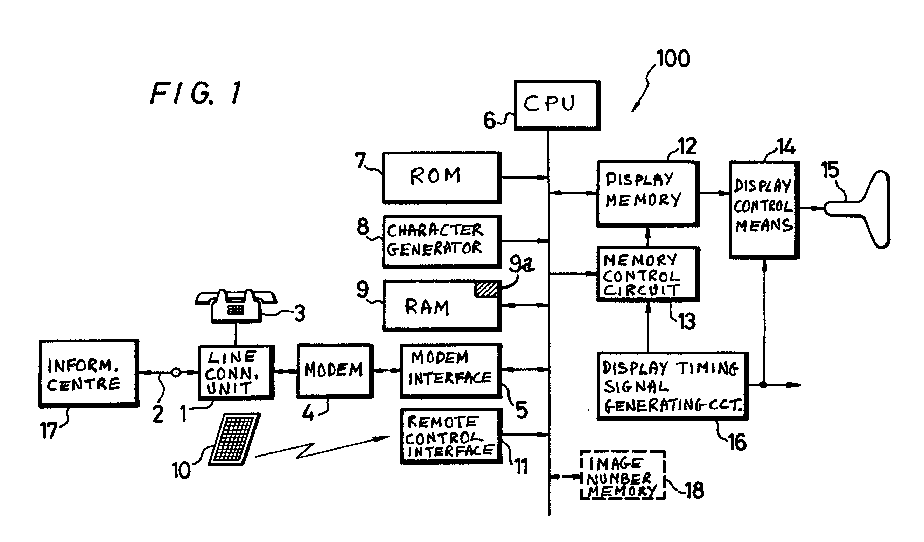

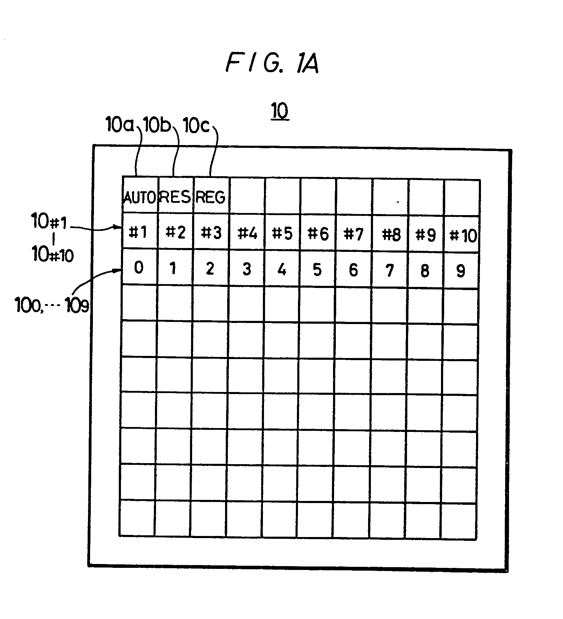

Figure 1 shows a videotex system comprising a user terminal 100 embodying the invention, an information centre 17 and a telephone network line 2 connecting the user terminal and information centre and over which data and commands are transmitted. In the following discussion, the user terminal 100 will be described as operating in the environment of the CAPTAIN videotex system used in Japan. There are a number of other videotex systems presently operating around the world, such as the PRESTEL system available in the UK, the NAPLPS (North American Presentation-Level-Protocol Syntax) available in the United States, and the Teildon system available in Canada. Other systems available in the United States are The Source and Compuserve information services. It will be appreciated that user terminals embodying the present invention could operate advantageously in any of these systems, and the present invention is not limited to use in the CAPTAIN system.

The CAPTAIN system, like other videotex systems, is an interactive system. The user enters requests for information, the requests are processed at the information centre 17, and an appropriate image is transmitted to the user terminal 100. The information centre 17 is not necessarily at a single location, but may be composed of a number of different computing centres each having data bases of hundreds of thousands of pages of information. These different centres are connected to one another over telephone network lines and may further be connected to external computer systems which provide services such as online bookings, financial quotations or banking services. The information centre 17 may also be operative to provide system messages to the user terminal 100. In short, the information centre 17 is a highly complex information source and is expected to grow even more complex with advances in technology and data communications interface systems. However, the information centre 17 does not comprise part of the present invention, except insofar as it is responsive to received commands, as defined below, and to transmit image data corresponding to selected images to the user terminal 100 in response to such commands. This general operation of the information centre 17 is well known.

A line connecting unit 1 operates as a switch so as selectively to connect the telephone network line 2 either to a conventional telephone 3 or to a modem 4. The modem 4 is coventionally used for demodulating telephone signals received from the telephone network line 2 and supplying the demodulated signals in recognisable form to a modern interface 5 of the user terminal 100. The modem 4 further is operative to modulate signals supplied from the modem interface 5 into telephone signals and to supply them to the telephone network line 2. The modem 4 may be physically separate from the user terminal 100 or it may be incorporated therein to form a single structure therewith. The circuitry and structure of the modem 4 and modem interface 5 may be conventional.

The user terminal 100 includes a central processing unit (CPU) 6 for controlling the signal processing and internal operations of the user terminal 100, a program read only memory (ROM) 7 for storing operating programs used by the CPU 6, a character generator 8 and a random access memory (RAM) 9, which is used as a work area for the CPU 6.

A keypad or keyboard 10 is provided with a plurality of keys actuable for entering various commands into the user terminal 100. As discussed below, and as shown in Figure 1A, the keys may include an autorequest key 10a, and numerical keys $10_0$, $10_1$ ... $10_9$ for entering numerical data as part of a command. In the illustrated embodiment, the keypad 10 is a remote control unit, and the user terminal 100 includes a remote control interface 11 operative in known manner to receive infra-red frequency signals generated by the keypad 10 and to translate the signals into corresponding input data acceptable by the CPU 6. However, it will be appreciated that the keypad 10 could be provided within the main structure of the user terminal 100 as an integrated portion thereof.

A display memory 12 stores data received through the modern interface 5. In the CAPTAIN system, the received data includes blocks of image data, each block corresponding to one image or page of information, and respective header data identifying the information. The header data describes the nature of the particular image data and might include an identification of the particular information retrieval system being accessed, the priority or security level of the data, and similar information. Importantly, the header data will include an identification recognisable by the information centre 17 as identifying this particular image data. In the present description, this identifying information is designated the image number data corresponding to the image data. In the CAPTAIN system, this image number data is, in fact, a nine digit number. In other systems, the identifying information may take another form, but as long as it identifies the partiuclar image data, it may be considered equivalent to the image number data as described herein. Further, in the CAPTAIN system, identification data is provided which allows the CPU 6 to determine whether the received data is image data or header data. However, there is no identification data provided within the header data itself to distinguish between the various elements of the header data, such as, the title of the image, a message associated with the image, and in particular the image number data. However, the header data is provided in a predetermined format in which the image number data always occurs at a certain position within the header data, specifically from the 20th character to the 28th character. It is also possible to determine when the characters in these positions are alphabetic, rather than numeric, in which case the characters are not image number data.

On occasion, a message within the header data may occupy these character positions, and so image number data is not available. Such messages usually include letters rather than numbers, and letters can be distinguished from numbers by pattern recognition methods. Consequently, the CPU 6 will be able to distinguish the cases when the image number is available and when it is not. By such means, the CPU 6 is able to detect the image number data within the header data.

A memory control circuit 13 controls the display memory 12. The blocks of image data corresponding to one page of information and respective header data stored in the display memory 12 are read out therefrom by a display signal corresponding to the image data. The video signal is supplied to a display tube 15, which may be a conventional cathode ray tube (CRT). A display timing signal generating circuit 16 connected to both the memory control circuit 13 and display control means 14 generates control signals used in the display of the images, including synchronising signals and display position signals, in accordance with known display techniques.

The operation of the user terminal 100 in accessing an image will now be described. Initially, the user terminal 100 is linked through the modem interface 5, the modem 4, the line connecting unit 1 and the telephone network line 2 to the information centre 17. To begin the image acccession operation, the user actuates selected keys on the keypad 10 to input a command accessing one of the available images. Conventionally, this command may be to display the next image following the image currently being displaye, or it may be the selection of a particular image, in which case the command will include the image number of the particular image to be displayed. The command may be an image selection command which accesses the image whose image number data is stored in an image number memory such as a numeric register 9a of the RAM 9.

The entered command is transmitted, conventionally by infra-red frequencies, to the remote control interface 11, in which it is translated into computer input data and supplied to the CPU 6. The CPU 6 modifies the input data to put it into a predetermined format acceptable by the information centre 17. The CPU 6 supplies the modified input data through the modem interface 5 to the modem 4, which modulates the data and transmits it as a telephone signal through the line connecting unit 1, over the telephone network line 2 and to the information centre 17. At the information centre 17, the received command signal is processed and the requested data is transmitted back to the user terminal 100 over the telephone network line 2 and through the line connecting unit 1, the modem 4 and the modem interface 5. The data transmitted from the information centre 17 incldues the block of image data corresponding to the selected image and the respective header data, and is stored temporarily in the work RAM 9.

The CPU 6 now determines whether the image data received is character code data. If it is character code data, the CPU 6 reads out corresponding font data from the character generator 8 and stores it in the display memory 12 together with appropriate colour data. If the image data is not character data, it is written directly into the display memory 12.

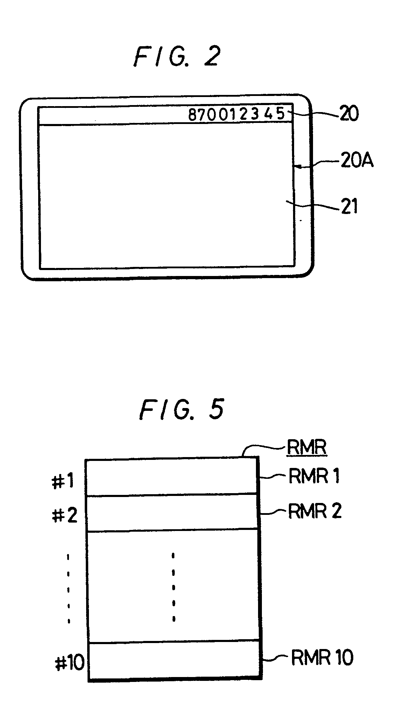

The display corresponding to the image data and the header data is illustrated in Figure 2, which shows a display screen 20A presenting an image or page in the CAPTAIN system. The display screen 20A is divided into a header portion 20 and an image portion 21. The image portion 21 displays the image data while the header portion 20 contains such information as a message from the information centre 17, the title of the image, or the image number. Thus, from this header data, the user may note the image number of the image the user currently is viewing. Subsequently, the user immediately can recall the desired image by imputting the image number previously noted from the header portion 20 of the display screen 20A. However, given the fact that hundreds of thousands of pages are available over videotex and that the image number in the CAPTAIN system has nine digits, the user would have to remember nine digits even to recall one page, while to recall one of several pages would require an even greater feat of memory. Furthermore, disconnection may occur accidentally at any time, due to the failure of transmission of the carrier from the information centre 17 for any reason, or if the user fails to input a command within a predetermined time and thus activates an automatic shut-off condition. To constantly keep track of the image numbers just in case the system may cease operation is excessively inconvenient. This problem may be eliminated or, at least, its severity may be mitigated, by the features of the user terminal 100 that will now be described.

The user terminal 100 includes an image number memory for storing the image number data of at least one selected image. In the present embodiment, the image number memory includes the above-mentioned numeric register 9a of the work RAM 9. The image number data can be reserved actively in a reserve and register operation executed in response to acutation of keys of the keypad 10, or the image number data of the image data currently stored in the image memory 12 may be stored automatically in the numeric register 9a upon receipt of the data. In the present embodiment, the numeric register 9a stores the image number data of a single image, and a single actuation of the unitary autorequest key 10a (Figure 1A) of the keypad 10 causes display of the image whose image number data is stored in the image number memory constituted by the numeric register 9a.

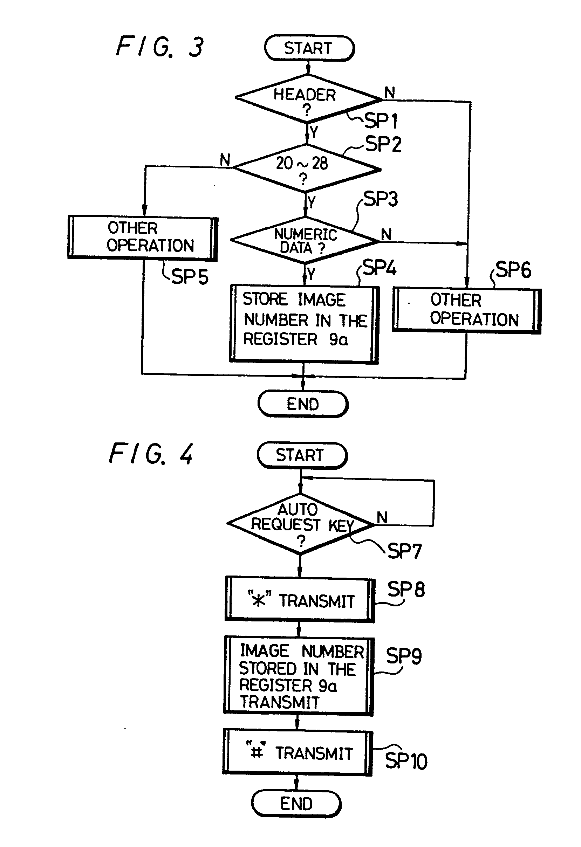

The operation of the user terminal 100 in detecting image number data in the header data and writing the image number data in the numeric register 9a will now be described with reference to Figure 3, which is a flowchart which illustrates an operating program for the CPU 6 normally stored in the ROM 7 and loaded into the CPU 6 for operation. The program begins when the incoming data is received and, in a step SP1, the CPU 6 decides or judges whether the received data is header data or image data. If it is determined in the step SP1 that the data being considered is image data, the CPU 6 proceeds to a step SP6, to perform another operation in accordance with an overall operating program of the CPU 6. If, on the other hand, it is determined in the step SP1 that the received data is header data, the program proceeds to a step SP2 in which the CPU 6 determines whether the data being considered lies within the range of positions allocated for image number data, that is from the 20th character to the 28th character. If, in the step SP2, the CPU 6 determines that the data is outside of the correct range for image number data, the program proceeds to a step SP5 to perform another operation in accordance with the overall operating program of the CPU 6. If the data considered in the step SP2 is within the range from the 20th to the 28th character, then the CPU 6 judges in a step SP3 whether or not this data is numeric or alphabetic. If, in the step SP3, the CUP 6 determines that the data is alphabetic data, the CPU 6 proceeds to the step SP6 for further operations. As mentioned above, the definition of alphabetic information implies that this data represents a message from the information centre 17 rather than image number data. In the CAPTAIN system, the data may be encoded in a number of different ways which are assigned ranks within the system. If the data being judged in the step SP3 has been transmitted with a rank higher than 2, the received coded information can be determined to be numeric or alphabetic data from the codes themselves. On the other hand, if the data transmission is of rank 1, then the incoming data is determined to be numeric or alphabetic by using pattern recognition techniques using previously stored numeric patterns. In either case, the CPU 6 will be able to detect the image number data in the header data if it is present, or will be able to detect its absence.

If the incoming data is determined to be numeric data, it is assumed that this data is the image number data, and the program proceeds to a step SP4 in which the image number data is written digit-by-digit in the numeric register 9A. This operation is performed automatically each time a new block of image data is received, whereby updated image number data constantly is being written into the numeric register 9a. Since the user terminal 100 itself keeps track of the image number of the currently displayed image, the user no longer needs to do so.

In the embodiment presently being described, the image number of only the currently displayed image is stored in the image number memory constituted by the numeric register 9a. Consequently, if the telephone link with the information centre 17 is disconnected, the user terminal 100 continues to store the image number of the image which was being viewed at the time of disconnection. As a result, a single unitary autorequest key 10a is sufficient to recall this image.

The operation of the user terminal 100 in response to the auctation of the autorequest key 10a is performed in accordance with a flowchart illustrated in Figure 4. In a step SP7, the CPU 6 determines whether the autorequest key 10a has been depressed. It it has, the CPU 6 proceeds to a step SP8 in which it transmits a code "*", then proceeds to a step SP9 in which it reads the image number data stored in the numeric register 9a and transmits the data to the information centre 17, and then proceeds to a step SP10 in which it transmits a code "#". Thus, the data received at the information centre 17 will appear as "*(image number data)#", which is a predetermined format acceptable under the CAPTAIN system. The information centre 17 is responsive to this command to transmit the block of image data and respective header data identified by the received image number data. Thus, in this embodiment, actuation of the autorequest key 10a by itself effects an image selection without the user being required to remember or enter the image number data himself. If the user wishes to redisplay the image present when the line was disconnected, he can access this image immediately, simply by actuating the autorequest key 10a. In a practical sense, the operation of the user terminal 100 greatly simplifies the use of the videotex system and provides a signifcant advantage.

As described above, the image number memory may be constituted by the numeric register 9a within work RAM 9. Alternatively, a non-volatile memory 18, illustrated in broken lines in Figure 1, may be provided as the image number memory. In this case, even when the power of the user terminal 100 is turned off, the image number data is retained in the non-volatile memory 18. When the non-volatile memory 18 forms the image number memory, the CPU 6 may be programmed automatically to transmit the image number stored in the memory 18 to the information centre 17 whenever the power is turned on and the telephone link established, without requiring any key operation at all. In such case, the system is initialised to the image whose number is stored in the memory 18, rather than to the first numbered image.

In the above-described user terminal embodying the present invention, the image number data of a single image is stored in the image number memory. In another embodiment of the invention, image number data corresponding to a selected plurality of images may be stored in the image number memory, and a corresponding plurality of image selection commands may be entered on the keyboard 10 for selectively retrieving respective images.

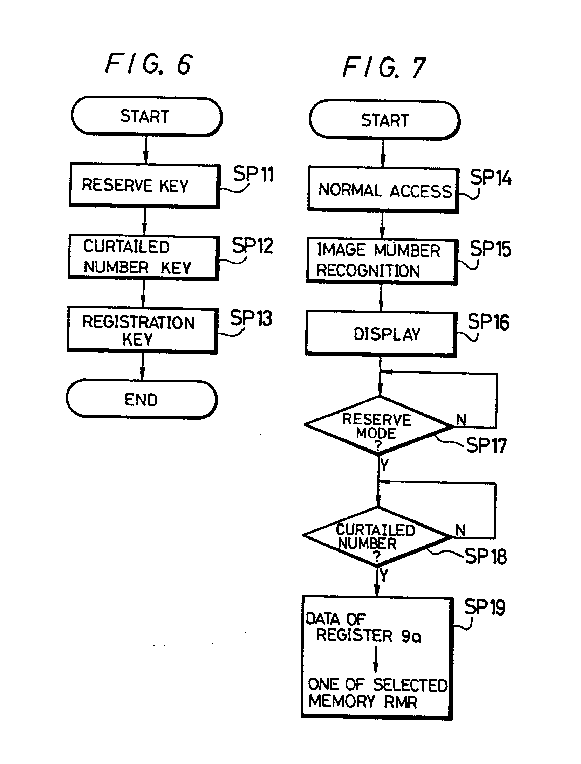

In the other embodiment, both the numeric register 9a and the non-volatile memory 18 are used as the image number memory. The memory 18 is now provided with, for example, 10 ordered memory locations or reserve number registers RMR1, RMR2, ... RMR10, organised as a reserve number memory RMR, as illustrated in Figure 5. These 10 ordered memory locations are allocated respective addresses indicative of the order of the memory locations. Thus, the reserve number register RMR1 is allocated an address "#1", the reserve number register RMR 2 is allocated an address "#2", and so forth. The addresses serve as identifiers of the particular memory locations in which the image number memory is to be recorded and are easy to remember in that they are much shorter than the nine digit image number data. These addresses are thus curtailed numbers which may identify selected images. The keypad 10 includes correspondingly numbered registered keys $10_{\#1}$, $10_{\#2}$—$10_{\#10}$ for entering the curtailed numbers.

The CPU operates as in the first described embodiment to detect the image number data in the header data currently stored in the image memory 12 and automatically stores the image number data in the numeric register 9a whenever a new block of data and header data is received. The CPU 6 can transfer this image number data to an identified one of the registers RMR1 to RMR10 of the reserve number memory RMR upon command.

Thus, at any particular time when the user terminal 100 is in use, a particular block of image data and its respective header data are stored in the image memory 12, and the corresponding image and header information are displayed on the picture screen 20A. At this time, the user may decide he wants to refer to this particular image in the future, and consequently wishes to store the image number data of this image. This is achieved by a reserve and register operation performed by the CPU 6. The sequence of steps performed by the user in the reserve and register operation is illustrated in Figure 6. The operation begins at a stop SP11 by actuation of a reserve key 10b on the keypad 10 to initiate the reserve operation. The user then actuates a selected one of the register keys $10_{\#1}$—$10_{\#10}$ in the step SP12 to enter the address of one of the memory locations or registers RMR1 to RMR10 in which the image number data currently stored in the numeric register 9a is to be stored. The curtailed number $10_{\#10}$, corresponding to the address or location in the memory RMR at which respective image number data is stored, is short and easy to remember. The user then actuates a registration key 10c in a step SP13 to cause the CPU 6 to store the image number data in the identified memory location.

The operation of the CPU 6 in response to actuation of selected keys of the keypad 10 is in accordance with a flowchart illustrated in Figure 7. The program of Figure 7 begins at a step SP14, in which a new image is accessed by one of the conventional accessing procedures. In the illustrated example, a particular image is selected by entering the full image number data by actuation of the numeric keys $10_1$ to $10_{10}$ of the keypad 10. The CPU 6 is responsive to this entered image number data to add code "*" to the beginning and code "#" to the end of the entered image number data and to transmit this modified data in its predetermined format to the information centre 17. Accordingly, as described above, the corresponding image data and header data is transmitted from the information centre to the user terminal 100, in which the received data, including image data and header data, is stored initially in the work RAM 9. Then, in a step SP15, the CPU 6 extracts from the header data the image number data lying in the allocated region from the 20th character to the 28th character and stores the detected image number data in the numeric register 9a of the work RAM 9, as before. Thereafter, the CPU 6 proceeds to a step SP16, in which it transfers the image data from the work RAM 9 to the display memory 12, so that the corresponding image thereby is displayed on the display tube 15, at the same time as the header data also is displayed. However, the image number data remains in the numeric register 9a.

If the user now actuates the reserve key 10b, as indicated in Figure 6, the CPU 6 is responsive thereto to store the image number data from the numeric register 9a in an identified register of the reserve number register or memory RMR. Specifically, if the user actuates the reserve key in the step SP11 of Figure 6, the CPU detects this in a step SP17 of Figure 7 and enters the reserve mode. Of course, if the reserve key 10b is not depressed, the CPU 6 is placed in a standby mode or performs other, unrelated, operations.

When the reserve key 10b is depressed in the step SP11 and this is detected in the step SP17, the CPU 6 moves to a step SP18, in which it decides or judges whether a register key entering a curtailed number identifying a selected one of the memory registers of the memory RMR has been depressed.

When the CPU 6 determines that a curtailed number has been entered, it proceeds to a step SP19 in which the image number data in the register 9a is transferred to the selected memory register RMR1 to RMR10 whose address corresponds to the curtailed number. Thus, the user may select any image to be reserved by storing the respective image number data. Each of the reserve memory registers RMR1 to RMR10 may be written into any number of times, with each writing erasing the previously stored image number data.

When the user wishes to recall a selected one of the reserved images, it is necessary only to actuate that one of the register keys $10_{\#1}$ to $10_{\#10}$ indicative of the curtailed number of register of the memory RMR in which the respective image number data is stored. Consequently, all the user need remember is a number from 1 to 10 identifying the register in which the selected image is associated, and only a single key has to be actuated in order to recall the image. This clearly is far more convenient than having to remember and enter a nine digit number. Actuation of one register key will cause the CPU 6 to read the image number data from the correspondingly numbered one of the registers RMR1 to RMR10, attach a code "*" to the beginning of the image number data and a code "#" to the end thereof, and transmit the coded data to the information centre 17. Again, the information centre 17 is responsive to this command to supply the image data having respective header data identified by the received image number data. This not only makes the operation easier, but also reduces the possibility of misoperation.

Since the image number data is detected in the data supplied from the information centre 17 and is stored in one of the registers RMR1 to RMR10 by actuation of a single register key, and is recalled by actuation of the same register key, it is never necessary for the user to input the image number data which he wishes to be stored. Consequently, the operation of the user terminal 100 is correspondingly simplified.

**Claims**

1. A user terminal for displaying a selected one of a plurality of images transmitted in the form of respective image data and image number data from an information centre (17) over a communications network in response to an image selection command entered at the user terminal, the user terminal (100) comprising:

network terminal means (4) connected or capable of being connected to the communications network for receiving image data and image number data therefrom and for supplying thereto data corresponding to an image selection command;

display control means, including image memory means (12) for storing received image data and for generating a video signal in response to the stored image data;

display means (15) for displaying an image corresponding to the video signal;

additional memory means (9a, 18); and

manually actuable input keying means (10) for selective entry of a said image selection command to cause selection from said plurality of images of an image to be displayed;

characterised in that the additional memory means (9a, 18), hereinafter referred to as the image number memory means, is operative to store image number data corresponding to at least one of the plurality of images, and in that the user terminal is responsive to enter at the input keying means (10) a predetermined further image selection command, signifying that an image whose image number data is stored in the image number memory means is to be displayed, to display said image whose image number data is stored in the image number memory means.

2. A user terminal according to claim 1, wherein the network terminal means includes a modem (4) connected or capable of being connected to a communications network that comprises a telephone network.

3. A user terminal according to claim 1 or claim 2, wherein the input keying means (10) is actuable for selective entry of said image selection command in the form of the image number data corresponding to the image data of a selected image, and the user terminal is responsive to the entered image number data to display the corresponding image.

4. A user terminal according to claim 1, claim 2 or claim 3, wherein the image number memory means (9a, 18) is arranged to store the image number data corresponding to the current image data stored in the image memory means (12).

5. A user terminal according to claim 4, wherein the image memory means (12) is arranged initially to store the image number data corresponding to the current image data, and the display control means includes means for detecting the image number data initially stored in the image memory means (12) and means for automatically storing the detected image number data in the image number memory means (9a, 18).

6. A user terminal according to claim 5, wherein the image number memory means (9a, 18) is arranged to store the image number data of only the current image data, and the input keying means (10) includes unitary autorequest key means (10a) actuable for entering said predetermined further image selection command.

7. A user terminal according to claim 6, wherein the image number memory means includes random access memory numeric register means (9a).

8. A user terminal according to claim 6 or claim 7, wherein the image number memory means includes non-volatile memory means (18) for storing the image number data.

9. A user terminal according to claim 8, which is responsive to power turn-on display the image whose image number data is stored in the non-volatile memory means (18).

10. A user terminal according to any one of claims 1 to 5, wherein the image number memory means (9a, 18) is arranged to store the image number data for a selected plurality of said images, and the input keying means (10) is actuable for selective entry of any of a corresponding plurality of said predetermined further image selection commands.

11. A user terminal according to claim 10, wherein the input keying means (10) is actuable for effecting a reserve and register operation, and the display control means includes means responsive to the reserve and register operation for detecting the image number data currently stored in the image memory means (12) and for storing the detected image number data in the image number memory means (18/RMR).

12. A user terminal according to claim 11, wherein the image number memory means (18/RMR) includes a plurality of identifiable memory locations (RMR1 to RMR10) and the input keying means (10) includes reserve key means (10b) actuable for entering a plurality of identifiers each identifying a respective one of the memory locations (RMR1 to RMR10), and wherein the reserve and register operation includes entry of one of the identifiers to identify the memory location in which the detected image number data is to be stored.

13. A user terminal according to claim 12, wherein each said predetermined further image selection command includes entry of the identifier which indentifies the one memory location in which the image number data of the respective image data has been stored, the user terminal being responsive to said image selection to display the image whose image number data is stored in the identified one memory location of the image number memory means (18/RMR).

14. A user terminal according to claim 13, wherein the image number memory means (18/ RMR) includes *n* ordered memory locations (RMR1 to RMR10) and the reserve key means (10b) includes *n* reserve keys actuable for entering corresponding numbered identifiers in the form of identifying numbers 1, 2, ... *n*, each identifier identifying the correspondingly numbered memory location.

15. A user terminal according to any one of the preceding claims, for use with an information centre (17) that transmits image data including a plurality of image data blocks and respective header data associated therewith, the header data including image memory means (12) is operative to store a received image data block and respective header data, the display control means is operative to generate a video signal in response to the image data block stored in the image memory means, the image number memory means (9a, 18) is operative to store the image number data corresponding to at least one of the image data blocks, the manually actuable input keying means (10) can be used for entering said image selection commands, including at least one predetermined further image selection command for selecting an image data block whose image number is stored in the image number memory means, and command data generating means (6) is responsive to the image selection command for generating selection command data including the image number data of the selected image data block and for supplying the selection command data to the network terminal means (4).

**Patentansprüche**

1. Teilnehmerendgerät zum Anzeigen eines ausgewählten Bildes aus einer Mehrzahl von Bildern, die in Abhängigkeit von einem an dem Teilnehmerendgerät eingegebenen Bildauswahlbefehl in Form von entsprechenden Bilddaten und Bildnummerndaten von einem Informationszentrum (17) über ein Kommunikationsnetz übertragen werden, wobei das Teilnehmerendgerät (100) folgende Teile aufweist: eine Netz-Endeinrichtung (4), die zum Empfang von Bilddaten und Bildnummerndaten aus dem Netz und zur Lieferung eines Bildauswahlbefehls an das Netz mit diesem verbunden oder verbindbar ist, eine Display-Steuereinrichtung mit einer Bildspeichereinrichtung (12) zur Speicherung von empfangenen Bilddaten und zur Erzeugung eines Videosignals in Abhängigkeit von den gespeicherten Bilddaten, eine Display-Einrichtung (15) für die Anzeige eines dem Videosignal entsprechenden Bildes, eine zusätzliche Speichereinrichtung (9a, 18) und eine manuell betätigbare Eingabetastatur (10) für die wahlweise Eingabe eines Bildauswahlbefehls zur Auswahl eines anzuzeigenden Bildes aus der genannten Mehrzahl von Bildern, dadurch gekennzeichnet, daß die im folgenden Bildnummern-Speichereinrichtung bezeichnete zusätzliche Speichereinrichtung (9a, 18) in der Weise wirksam ist, daß sie Bildnummerndaten speichert, die zumindest einem aus der Mehrzahl von Bildern entsprechen, und daß das Teilnehmerendgerät auf die Eingabe eines vorbestimmten weiteren Bildauswahlbefehls an der Eingabetastatur (10), der angibt, daß ein Bild wiedergegeben werden soll, dessen Bildnummerndaten in der Bildnummern-Speichereinrichtung gespeichert sind, in der Weise reagiert, daß sie das Bilden anzeigt, dessen Bildnummerndaten in der Bildnummern-Speichereinrichtung gespeichert sind.

2. Teilnehmerendgerät nach Anspruch 1, bei dem die Netz-Endeinrichtung ein Modem (4) enthält, das mit einem Kommunikationsetz verbunden oder verbindbar ist, das ein Telefonnetz umfaßt.

3. Teilnehmerendgerät nach Anspruch 1 oder 2, bei dem die Eingabetastatur (10) für die selektive Eingabe eines Bildauswahlbefehls in Form der Bildnummerndaten betätigbar ist, die den Bildnummerndaten eines ausgewählten Bildes entsprechen, und bei dem das Teilnehmerendgerät auf die eingegebenen Bildnummerndaten mit der Anzeige des entsprechenden Bildes reagiert.

4. Teilnehmerendgerät nach Anspruch 1, 2 oder 3, bei dem die Bildnummern-Speichereinrichtung (9a, 18) so angeordnet ist, daß sie die Bildnummerndaten speichert, die dem in der Bildspeichereinrichtung (12) gespeicherten aktuellen Bild entspricht.

5. Teilnehmerendgerät nach Anspruch 4, bei dem die Bildspeichereinrichtung (12) so angeordnet ist, daß sie zunächst die Bildnummerndaten speichert, die den aktuellen Bilddaten entsprechen, und bei dem die Display-Steuereinrichtung Mittel zur Erfassung der zunächst in der Bildspeichereinrichtung (12) gespeicherten Bildnummerndaten sowie Mittel zum automatischen Speichern der so erfaßten Bildnummerndaten in der Bildnummern-Speichereinrichtung (9a, 18) aufweist.

6. Teilnehmerendgerät nach Anspruch 5, bei dem die Bildnummern-Speichereinrichtung (9a, 18) so angeordnet ist, daß sie nur die Bildnummerndaten der aktuellen Bilddaten speichert, und bei dem die Eingabetastatur (10) eine Einheitstastenanordnung (10a) für automatische Anforderung aufweist, die zur Eingabe des vorbestimmten weiteren Bildauswahlbefehls betätigbar ist.

7. Teilnehmerendgerät nach Anspruch 6, bei dem die Bildnummern-Speichereinrichtung eine numerische Registereinrichtung (9a) als Speicher mit wahlfreiem Zugriff aufweist.

8. Teilnehmerendgerät nach Anspruch 6 oder 7, bei dem die Bildnummern-Speichereinrichtung eine nichtflüchtige Speichereinrichtung (18) zur Speicherung der Bildnumerndaten enthält.

9. Teilnehmerendgerät nach Anspruch 8, das auf die Einschaltung der Stromversorgung mit der Anzeige des Bildes reagiert, dessen Bildnummerndaten in der nichtflüchtigen Speichereinrichtung (18) gespeichert sind.

10. Teilnehmerendgerät nach einem der Ansprüche 1 bis 5, bei dem Bildnummern-Speichereinrichtung (9a, 18) so angeordnet, ist, daß sie die Bildnumerndaten einer ausgewählten Anzahl der genannten Bilder speichert, und bei dem die Eingabetastatur (10) für die selektive Eingabe eines aus einer entsprechenden Mehrzahl der genannten vorbestimmten weiteren Bildauswahlbefehle betätigbar ist.

11. Teilnehmerendgerät nach Anspruch 10, bei dem die Eingabetastatur (10) zur Durchführung einer Reserve- und Register-operation betätigbar ist, und bei dem die Display-Steuereinrichtung Mittel aufweist, die auf die Reserve- und Registeroperation in der Weise ansprechen, daß sie die in der Bildspeichereinrichtung (12) gespeicherten aktuellen Bildnummerndaten detektieren und die detektierten Bildnummerndaten in der Bildnummern-Speichereinrichtung (18/RMR) speichern.

12. Teilnehmerendgerät nach Anspruch 11, bei dem die Bildnummern-Speichereinrichtung (18/RMR) eine Mehrzahl von identifizierbaren Speicherplätzen (RMR1 bis RMR19) aufweist und bei der die Eingabetastatur (10) eine Reserve-Tastenanordnung (10b) aufweist, die zur Eingabe mehrerer Indentifiziermerkmale betätigbar ist, die jeweils eines der Identifiziermerkmale zur Indentifizierung des Speicherplatzes umfaßt, in dem die detektierten Bildnummerndaten zum speichern sind.

13. Teilnehmerendgerät nach Anspruch 12, bei dem jeder der vorbestimmten weiteren Bildauswahlbefehle die Eingabe des Identifiziermerkmals umfaßt, das den einen Speicherplatz identifiziert, an dem die Bildnummerndaten der betreffenden Bilddaten gespeichert wurden, wobei das Teilnehmerendgerät auf die Bildauswahl in der Weise reagiert, daß es das bild anzeigt, dessen Bildnummer an dem identifizieren, Speicherplatz der Bildnummern-Speichereinrichtung (18/RMR) gespeichert ist.

14. Teilnehmerendgerät nach Anspruch 13, bei dem Bildnummern-Speichereinrichtung (18/RMR) n geordnete Speicherplätze (RMR1 bis RMR10) aufweist und die Reserve-Tastenanordnung (10b) n Reserve-Tasten aufweist, die zu Eingabe entsprechend numerierter Identifiziermerkmale in Form von Identifizierungsnummern 1, 2, . . . , n betätigbar ist, von denen jede den entsprechend numerierter Speicherplatz identifiziert.

15. Teilnehmerendgerät nach einem der vorhergehenden Ansprüche zur Verwendung in Verbindung mit einem Informationszentrum (17), dass Bilddaten sendet, die eine Mehrzahl von Bilddaten-Blöcken und diesen zugeordneten jeweiligen Kopf-Daten enthalten, wobei die Kopf-Daten Bildnumerndaten enthalten, die den betreffenden Bilddaten-Block identifizieren, wobei die Bildspeichereinrichtung (12) in der Weise wirksam ist, daß sie einen empfangenen Bilddaten-Block und die betreffenden Kopf-Daten speichert, wobei ferner die Display-Steuereinrichtung in der Weise wirksam ist, daß sie ein Videosignal in Abhängigkeit von dem in der Bildspeichereinrichtung gespeicherten Bilddaten-Block erzeugt, bei der die Bildnummern-Speichereinrichtung (9a, 18) die Bildnummerndaten speichert, die wenigstens einem der Bilddaten-Blöcke entsprechen, wobei die manuell betätigbare Eingabetastatur (10) zur Eingabe der Bildauswahlbefehle einschließlich wenigstens eines vorbestimmten weiteren Bildauswahlbefehls zur Auswahl eines Bilddaten-Blocks dient, dessen Bildnummer in der Bildnummern-Speichereinrichtrung gespeichert ist, und wobei eine Einrichtung (6) zur Erzeugung von Befehls-Daten auf die Bildauswahlbefehle anspricht, aum Auswahl-Befehls-Daten zu erzeugen, die die Bildnummerndaten des ausgewählten Bilddaten-Blocks enthalten, und um die Auswahl-Befehls-Daten der Netz-Endeinrichtung (4) zuzuleiten.

**Revendications**

1. Terminal d'utilisateurs pour visualiser une image sélectionnée parmi un ensemble d'images transmises sous la forme de données d'image et de données de numéro d'image respectives à partir d'un centre d'information (17) par un réseau de communication en réponse à une commande de sélection d'image entrée dans le terminal d'utilisateurs, le terminal d'utilisatuers (100) comprenant;

un moyen terminal de réseau (4) connecté ou pouvant être au réseau de communication pour recevoir des données d'image et des données de numéro d'image de celui-ci et pour lui fournir des données correspondant à une commande de sélection d'image:

un moyen de commande de visualisation incluant un moyen à mémoire d'image (12) pour mémoriser les données d'image reçues et pour engendrer un signal vidéo en réponse aux données d'image mémorisées;

un moyen de visualisation (15) pour visualiser une image correspondant au signal vidéo;

un moyen à mémoire supplémentaire (9a, 18); et

un moyen d'introduction par touches actionnable manuellement (10) pour entrer sélectivement une commande de sélection d'image afin d'entraîner une sélection d'une image à visualiser parmi l'ensemble d'images;

caractérisé en ce que le moyen à mémoire supplémentaire (9a, 18), appelé dans la suite le moyen à mémoire de numéro d'image, est actif pour mémoriser des données de numéro d'image correspondant à au moins une de l'ensemble d'images, et en ce que le terminal d'utilisateurs réagit pour entrer dans le moyen d'introduction par touches (10) une autre commande de sélection d'image prédéterminée, qui signifie qu'une image dont des données de numéro d'image sont mémorisées dans le moyen à mémoire de numéro d'image doit être visualisée, pour visualiser l'image dont les données de numéro d'image sont mémorisées dans le moyen à mémoire de numéro d'image.

2. Terminal d'utilisateurs selon la revendication 1, dans lequel le moyen terminal de réseau comprend un modulateur-démodulateur ou modem (4) connecté ou pouvant être connecté à un réseau de communication qui comprend un réseau téléphonique.

3. Terminal d'utilisateurs selon l'une quelconque des revendications 1 et 2, dans lequel le moyen d'introduction par touches (10) est actionnable pour entrer sélectivement une commande de sélection d'image sous la forme des données de numéro d'image correspondant aux données d'image d'une image sélectionnée, et le terminal d'utilisateurs réagit aux données de numéro d'image entrées pour visualiser l'image correspondante.

4. Terminal d'utilisateurs selon l'une quelconque des revendications 1 à 3, dans lequel le moyen à mémoire de numéro d'image (9a, 18) est agencé pour mémoriser les données de numéro d'image correspondant aux données d'image présentes mémorisées dans le moyen à mémoire d'image (12).

5. Terminal d'utilisateurs selon la revendication 4, dans lequel le moyen à mémoire d'image (12) est agencé pour mémoriser initialement les données de numéro d'image correspondant aux données d'image présentes, et le moyen de commande de visualisation comprend un moyen pour détecter les données de numéro d'image initialement mémorisées dans le moyen à mémoire d'image (12) et un moyen pour mémoriser automatiquement les données de numéro d'image détectées dans le moyen à mémoire de numéro d'image (9a, 18).

6. Terminal d'utilisateurs selon la revendication 5, dans lequel le moyen à mémoire de numéro d'image (9a, 18) est agencé pour mémoriser les données de numéro d'image uniquement des données d'image présentes, et le moyen d'introduction par touches (10) comprend un moyen à touche de demande automatique unitaire (10a) actionnable pour entrer l'autre commande de sélection d'image prédéterminée.

7. Terminal d'utilisateurs selon la revendication 6, dans lequel le moyen à mémoire de numéro d'image comprend un moyen à registre numérique de mémoire vive (9a).

8. Terminal d'utilisateurs selon l'une quelconque des revendications 6 et 7, dans lequel le moyen à mémoire de numéro d'image comprend un moyen à mémoire rémanente (18) pour mémoriser les données de numéro d'image.

9. Terminal d'utilisateurs selon la revendication 8, qui réagit au branchement d'une alimentation pour visualiser l'image dont les données de numéro d'image sont mémorisées dans le moyen à mémoire rémanente (18).

10. Terminal d'utilisateurs selon l'une quelconques des revendications 1 à 5, dans lequel le moyen à mémoire de numéro d'image (9a, 18) est agencé pour mémoriser les données de numéro d'image pour un ensemble sélectionné des images, et le moyen d'introduction par touches (10) est actionnable pour entrer sélectivement n'importe laquelle d'un ensemble correspondant des autres commandes de sélection d'image prédéterminées.

11. Terminal d'utilisateurs selon la revendication 10, dans lequel le moyen d'introduction par touches (10) est actionnable pour exécuter une opération de mise en réserve et d'enregistrement, et le moyen de commande de visualisation comprend un moyen réagissant à l'opération de mise en réserve et d'enregistrement pour détecter les données de numéro d'image alors mémorisées dans le moyen à mémoire d'image (12) et pour mémoriser les données de numéro d'image détectées dans le moyen à mémoire de numéro d'image (18/RMR).

12. Terminal d'utilisateurs selon la revendication 11, dans lequel le moyen à mémoire de numéro d'image (18/RMR) comprend un ensemble d'emplacements de mémoire identifiables (RMR1 à RMR10) et le moyen d'introduction par touches (10) comprend un moyen à touche de mise en réserve (10b) actionnable pour entrer un ensemble d'identificateurs identifiant chacun un emplacement respectif parmi les emplacements de mémoire (RMR1 à RMR10), et dans lequel l'opération de mise en réserve et d'enregistrement comprend l'entrée d'un des identificateurs pour identifier l'emplacement de mémoire dans lequel les données de numéro d'image détectées doivent être mémorisées.

13. Terminal d'utilisateurs selon la revendication 12, dans lequel chaque autre commande de sélection d'image prédéterminée comprend l'entrée de l'identificateur qui identifie l'emplacement de mémoire dans lequel les données de numéro d'image des données d'image respectives ont été mémorisées, le terminal d'utilisateurs réagissant à la sélection d'image sont mémorisées dans l'emplacement de mémoire identifié du moyen à mémoire de numéro d'image (18/RMR).

14. Terminal d'utilisateurs selon la revendication 13, dans lequel le moyen à mémoire de numéro d'image (18/RMR) comprend $n$ emplacements de mémoire ordonnés (RMR1 à RMR10) et le moyen à touche de mise en réserve (10b) comprend *n* touches de mise en réserve actionnables pour entrer des identificateurs numérotés en correspondance sous la forme de numéros d'identification 1, 2, . . ., *n*, chaque identificateur identifiant l'emplacement de mémoire numéroté en correspondance.

15. Terminal d'utilisateurs selon l'une quelconque des revendications précédentes, destiné à servir avec un centre d'information (17) qui émet des données d'image incluant un ensemble de blocs données d'image et de données en-tête respectives associées à celles-ci, les données en-tête incluant des données de numéro d'image identifiant le bloc de données d'image respectif, dans lequel le moyen à mémoire d'image (12) est actif pour mémoriser un bloc de données d'image reçu et des données en-tête respectives, le moyen de commande de visualisation est actif pour engendrer un signal vidéo en réponse au block de données d'image mémorisé dans le moyen à mémoire d'image, le moyen à mémoire de numéro d'image (9a, 18) est actif pour mémoriser les données de numéro d'image correspondant à au moins un des blocs de données d'image, le moyen d'introduction par touches actionnable manuellement (10) peut être utilisé pour entrer les commandes de sélection d'image, y compris au moins un autre commande de sélection d'image prédéterminée, pour sélectionner un bloc de données d'image dont le numéro d'image est mémorisé dans le moyen à mémoire de numéro d'image, et un moyen de génération de données de commande (6) réagit à la commande de sélection d'image pour générer des données de commande de sélection incluant les données de numéro d'image du block de données d'image sélectionné et pour fournir les données de commande de sélection au moyen terminal de réseau (4).

FIG. 1

## F I G. 1A

10

10a, 10b, 10c

| AUTO | RES | REG | | | | | . | | |
|------|-----|-----|------|------|------|------|------|------|------|
| #1 | #2 | #3 | #4 | #5 | #6 | #7 | #8 | #9 | #10 |
| 0 | 1 | 2 | 3 | 4 | 5 | 6 | 7 | 8 | 9 |
| | | | | | | | | | |
| | | | | | | | | | |
| | | | | | | | | | |
| | | | | | | | | | |
| | | | | | | | | | |
| | | | | | | | | | |
| | | | | | | | | | |
| | | | | | | | | | |

10#1

10#10

100, ··· 109

## FIG. 2

870012345    — 20

20A

21

## FIG. 5

RMR

#1    RMR 1

#2    RMR 2

#10    RMR 10

3

FIG. 3

FIG. 4

4

## FIG. 6

START

RESERVE KEY — SP11

CURTAILED NUMBER KEY — SP12

REGISTRATION KEY — SP13

END

## FIG. 7

START

NORMAL ACCESS — SP14

IMAGE NUMBER RECOGNITION — SP15

DISPLAY — SP16

RESERVE MODE ? — N — SP17

Y

CURTAILED NUMBER ? — N — SP18

Y

DATA OF REGISTER 9a ↓ ONE OF SELECTED MEMORY RMR — SP19